(19) Europäisches Patentamt
European Patent Office
Office européen des brevets

(11) **EP 4 765 494 A1**

(12) **EUROPEAN PATENT APPLICATION**

(43) Date of publication:
24.06.2026 Bulletin 2026/26

(21) Application number: 24222233.9

(22) Date of filing: 20.12.2024

(51) International Patent Classification (IPC):
H01Q 17/00 (2006.01)        H01Q 1/32 (2006.01)
H01Q 1/42 (2006.01)

(52) Cooperative Patent Classification (CPC):
H01Q 17/008; H01Q 1/3233; H01Q 1/42

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Aptiv Technologies AG
8200 Schaffhausen (CH)

(72) Inventors:
• Raza, Bilal
42655 Solingen (DE)

• Ioffe, Alexander
53229 Bonn (DE)
• Bakro, Manar
51145 Köln (DE)
• Talai, Armin
90431 Nürnberg (DE)
• Stefer, Markus
42897 Remscheid (DE)
• Leonardi, Roberto
91336 Heroldsbach (DE)

(74) Representative: Manitz Finsterwald
Patent- und Rechtsanwaltspartnerschaft mbB
Martin-Greif-Straße 1
80336 München (DE)

(54) **RADAR SENSOR**

(57)    A radar sensor comprises an antenna layer with antenna elements, and a compound radome including an absorber layer on top of the antenna layer and a cover layer on top of the absorber layer. The absorber layer has a higher electromagnetic absorption than the cover layer. The compound radome comprises a primary region in which the absorber layer has a reference absorber thickness and the cover layer has a reference cover thickness, and a secondary region in which the absorber layer has a secondary absorber thickness and the cover layer has a secondary cover thickness. The secondary cover thickness is different from the reference cover thickness. An electromagnetic reflectivity is at a minimum within the primary region for a first incident angle and within the secondary region for a second incident angle being different from the first incident angle.

**EP 4 765 494 A1**

**Description**

FIELD

The present disclosure relates to a radar sensor comprising an antenna layer which includes at least one antenna element configured to transmit and to receive electromagnetic waves, and compound radome which includes an absorber layer extending on top of the antenna layer and a cover layer extending on top of the absorber layer.

BACKGROUND

Radar sensors are nowadays important perception sensors in vehicles and generally in the field of automotive technology. This is due to the fact that, in contrast to others perception sensors like cameras, information provided by radar sensors is also available at low illumination levels and under unfavorable weather conditions.

For aerodynamic and aesthetic reasons, automotive radar sensors are usually integrated in or hidden behind other vehicle components, i.e. behind the outer shell of the vehicle. Such vehicle components may be a bumper, a facia, an emblem etc. In addition, internal components of an automotive radar sensor are usually mounted in a sensor housing on top of which a radome is placed. The housing and the radome encapsulate and protect internal sensor components from environmental factors like dust, moisture, corrosion, rust and mechanical damage.

However, if another vehicle component is placed in front of antennas of an automotive radar sensor, the performance of the radar sensor may be degraded with respect to its ideal performance. This may be due to the fact that between the vehicle component and the radar sensor, strong multibounce effects may occur, e.g. multiple reflections between different surfaces of the vehicle component, the radar sensor and the radome. The impact of such multibounce effects on the specific antenna radiation pattern depends on a respective air gap between the radome and the radar sensor and between the radome and the vehicle component, and on the thickness and the shape of the radome. Furthermore, an increased level of side lobes, e.g. elevation side lobes, and depolarization effects etc. may occur.

Even if a radome of a radar sensor is properly designed and integrated in a vehicle, most of the above-mentioned disturbing effects may still remain e.g. due to the multibounce reflections between metallic planar surfaces of the radar sensor and vehicle components. Such metallic surfaces may have a high reflectivity for electromagnetic waves and may be present within the radar sensor at a top surface of an antenna board and/or of the radome, and in addition at another vehicle component, e.g. a bumper or a facia of the vehicle.

In addition, an angle error may be increased due to the above effects when angle finding with respect to external objects is performed by the radar sensor. For example, if the radar sensor like a front radar of a vehicle has to be integrated behind a painted fascia and a high accuracy is required for angle finding or determining a direction of arrival (DoA) of the radar waves, the interaction of the radar waves with the fascia should be strongly mitigated. The same holds true if the radar sensor has an extended field of view regarding elevation.

Accordingly, there is a need to have a radar sensor for which disturbing effects like multibounce reflections are reduced when the radar sensor is mounted in close vicinity of another vehicle component.

SUMMARY

The present disclosure provides a radar sensor and a method for manufacturing such a radar sensor according to the independent claims. Embodiments are given in the subclaims, the description and the drawings.

In one aspect, the present disclosure is directed at a radar sensor comprising an antenna layer which includes at least one antenna element configured to transmit and to receive electromagnetic waves, and a compound radome which includes an absorber layer extending on top of the antenna layer and a cover layer extending on top of the absorber layer. The absorber layer has a higher absorption coefficient for electromagnetic waves than the cover layer. The compound radome comprises a primary region in which the absorber layer has a reference absorber thickness and in which the cover layer has a reference cover thickness for at least one position within the primary region. Furthermore, the compound radome comprises at least one secondary region in which the absorber layer has a secondary absorber thickness and in which the cover layer has a secondary cover thickness for at least one position within the secondary region. The secondary cover thickness is different from the reference cover thickness. A reflectivity of electromagnetic waves is at a minimum within the primary region for a first predefined incident angle, while the reflectivity of electromagnetic waves is at a minimum within the secondary region for a second predefined incident angle being different from the first predefined incident angle.

The radar sensor may comprise different components including, for example, a layer or a board for electronic elements like an MMIC (monolithic microwave integrated circuit), a layer or component formed as an antenna bottom lid, and the antenna layer formed as an antenna top lid. Within the antenna layer, one or more antenna elements are located which may be surrounded by the absorber layer.

That is, the absorber layer may extend on top of such areas of the antenna layer which are free of antenna elements.

The antenna layer may define a reference plane on top of which one or more antenna elements are installed. In a direction perpendicular to the reference plane, the respective thickness of the absorber layer and of the cover layer may be defined, i.e. the reference absorber thickness and the reference cover thickness as well as the secondary absorber thickness and the secondary cover thickness. The direction in which these thicknesses are defined may also be identical with the boresight direction of the radar sensor.

The electromagnetic waves being transmitted and received by the antenna elements of the radar sensor may have a frequency in a suitable range for automotive radars, e.g. in a range from 76 to 81 GHz, or alternatively a frequency beyond 100 GHz, wherein the frequency band about 120 GHz may be relevant for advanced automotive radar sensors.

The compound radome including the absorber layer and the cover layer means that at least one absorber layer and at least one cover layer is required for constituting the compound radome. However, the compound layer may also be a multilayer-system which may also include e.g. additional painting layers or layers for improving the lighting properties of the compound radome. Moreover, such a multilayer-system may also include more than one absorber layer and more than one cover layer.

The primary region and the at least one secondary region may have macroscopic dimensions on top of the area being free of antenna elements. However, the primary region and the at least one secondary region may be discontinuous, i.e. including different subregions which are spatially separated and which are provided with the respective reference thickness and the respective secondary thickness of the absorber layer and of the cover layer, respectively, for at least one position within the respective subregion. For example, a part of the primary region and one of the subregions belonging to the secondary region may be provided between pairs of antenna elements, wherein the respective subregion of the secondary region having the secondary absorber thickness may be formed as a cavity or a protrusion with respect to a reference height level. Such a reference height level may be defined by an upper surface of the absorber layer at the at least one position within the primary region at which the absorber layer has the reference absorber thickness. Since the absorber layer and the cover layer may be connected to each other without an air gap therebetween, material of the cover layer may fill the one or more cavities or surround the one or more protrusions which provide the secondary absorber thickness within the secondary region.

The first and second predefined incident angle may be defined with respect to a direction perpendicular to an upper surface of the compound radome or perpendicular to the reference plane at or on which the antenna elements are located. For a given frequency of the electromagnetic waves, the predefined incident angle for which the reflectivity of the electromagnetic waves is at a minimum depends on the respective thickness of the cover layer, i.e. the reference cover thickness and the secondary cover thickness, within the respective region.

An electric length of the cover layer and of the absorber layer may be optimized, together with an antenna surface, for a minimum reflectivity of electromagnetic waves. A possible option to minimize the reflectivity may be described via the following equation to achieve a maximum attenuation or a minimum reflection of the electromagnetic waves within the respective region, i.e. for the electromagnetic waves having the respective first and second predefined incident angle:

$$d = \frac{\lambda}{4} + i * \frac{\lambda}{2} \quad with \lambda = \frac{c_0}{f * DK^{0.5}}$$

wherein $\lambda$ is the wavelength of the electromagnetic waves at a frequency f, $c_0$ is the velocity of light in vacuum and DK is the dielectric permittivity of the material in the cover layer. i denotes an integer number but may also be zero.

The respective electric length determines the required thickness of the cover layer within the primary region and the at least secondary region for achieving minimum reflectivity at the first and second predefined incident angle, i.e. the reference cover thickness and the secondary cover thickness.

The respective required thickness of the cover layer within these regions may correspond to the above-mentioned reference height level of the absorber layer for the primary region and to a secondary height level of the absorber layer for the at least one secondary region, respectively, i.e. in case that the compound radome has a constant total thickness. In other words, the reference cover thickness and the secondary cover thickness may determine the reference absorber thickness and the secondary absorber thickness if a constant thickness of the compound radome may be required.

The reference absorber thickness and the secondary absorber thickness, however, may just exceed a required minimum thickness in order to provide a sufficient absorption for the electromagnetic waves for suppressing multibounce-effects, for example. That is, the reference absorber thickness and the secondary absorber thickness may even be equal. In this case, air filled cavities may be formed at an antenna surface, i.e. on top of the antenna layer. Air filled cavities may also be caused by an antenna surface structure if a flat surface of the absorber layer faces towards the antenna layer. Alternatively, such a surface of the absorber layer may follow a top surface relief of the antenna layer without air filled cavities. However, if an almost constant thickness of the compound radome is required, the reference absorber thickness may be greater than the secondary absorber thickness if the reference cover thickness is smaller than the secondary cover thickness, and vice versa.

In summary, the reflectivity of the cover layer and of the absorber layer, i.e. of the compound radome as a whole, is minimized for at least two predefined incident angles, i.e. for the first predefined incident angle and for at least one further predefined secondary incident angle. Therefore, the disturbing effects on the performance of the radar sensor are decreased.

Moreover, the angle finding performance of the radar sensor may be improved. That is, when determining a direction of arrival (DoA), an angle error may be strongly reduced. In addition, a coverage of the radar sensor in azimuth and elevation angles may be extended, respectively, due to the reduction of the multibounce effects. In addition, the propagation of surface waves, e.g. between at least two antenna elements, may be reduced due to the extension of the absorber layer within areas being free of antenna elements.

Since the primary region and the at least one secondary region may be provided as macroscopic entities at a surface of the absorber layer, the effort for manufacturing the absorber layer and therefore for manufacturing the entire radar sensor may be reduced in comparison to absorber layers having small structures for reducing the above-described disturbing effects.

According to an embodiment, the secondary absorber thickness may be different from the reference absorber thickness. For example, secondary absorber thickness may be smaller than the reference absorber thickness if the secondary cover thickness is greater than the reference absorber thickness, and vice versa, By this means, an almost constant thickness of the compound radome may be achieved within both of the primary and secondary regions. This may provide a smooth appearance of the compound radome.

The first predefined incident angle may represent a boresight direction with respect to the antenna layer. With respect to multibounce effects, the most important angle range, i.e. close to the boresight direction, may be covered by such a selection of the first predefined incident angle. However, the presence of the second predefined incident angle being different from the boresight direction and also being provided with a minimum reflectivity may enhance the total reflectivity over a greater angle range in comparison to an absorber layer which only reduces reflectivity at boresight.

The primary region may extend between the at least one antenna element and the at least one secondary region. In other words, the primary region may be located close to or adjacent to the at least one antenna element, whereas the at least one secondary region may have a greater distance with respect to the at least one antenna element than the primary region. Therefore, multibounce reflections at boresight may be reduced, for example, by the primary region adjacent to the antenna element, whereas the at least one secondary region may be associated with a greater secondary incident angle at which a further minimum of the reflectivity occurs.

The reference absorber thickness, i.e. the above-mentioned reference height level, within the primary region may correspond to a maximum height level throughout the absorber layer. Conversely, the secondary absorber thickness within the secondary region may be smaller than the maximum height level being associated with the primary region.

The at least one secondary region may be at least partly located between two antenna elements. Hence, the secondary region may improve an isolation between these two antenna elements due to the minimum of the reflectivity at the second predefined incident angle within the secondary region.

According to a further embodiment, in the at least one secondary region the absorber layer may include a plurality of cavities in which the secondary absorber thickness may be smaller than the reference absorber thickness. Such cavities may require a low effort regarding manufacturing of the absorber layer. Moreover, the cavities may provide a minimum reflectivity e.g. at the second predefined incident angle being different from e.g. boresight.

In addition, each of the cavities may be formed as a rectangular stripe, and at least one of the stripes may have a length being larger than a length of the at least one antenna element in one direction within the absorber layer. Such rectangular stripes may require a further reduced effort regarding manufacturing. In addition, the isolation of the at least one antenna element may be improved since one of the stripes extends at least over the entire length of the antenna element in a predefined direction.

Moreover, the cavities may be aligned in parallel to each other. Such an alignment may further reduce the effort for manufacturing the absorber layer. In addition, the cavities being aligned in parallel may improve the isolation of antenna elements.

In the secondary region, the absorber layer may include at least one area being inclined with respect to a reference plane extending in parallel to the antenna layer. Manufacturing the secondary region for minimizing the reflectivity for the second predefined incident angle may be facilitated by the inclined or tilted area within the secondary region.

According to a further embodiment, in the primary region and/or in the at least one secondary region, a surface of the absorber layer may be have a continuous height gradient. For example, the primary and secondary regions may be defined as different regions or areas at a continuously rising or declining surface of the absorber layer. In addition, a corresponding surface, e.g. an inner surface, of the cover layer may also have a continuous height gradient, e.g. having the same absolute value but different sign. In other words, if the absorber layer has a declining surface, for example, the cover layer may have a rising surface. Such surfaces of the absorber layer and of the cover layer having a respective continuous height gradient may provide a certain range of inclination angles for the electromagnetic waves, e.g. close to boresight, in which the reflection of the compound radome may be minimized.

The continuous height gradient may have a constant absolute value in at least a part of the primary and secondary regions, and this absolute value may depend on a field of view of the radar sensors. The field of view may be an instrumental field of view regarding the azimuth and elevation angles with respect to the radar sensor. If a wide field of view is required, a larger absolute value for the height gradient may be applied.

Alternatively, the continuous height gradient may change in a non-linear manner in at least a part of the primary and secondary regions. Such a non-linearly changing height gradient may allow for covering an increased angle range regarding the minimization of the reflectivity. In addition, the above-mentioned embodiments may be combined in that in the primary and secondary regions, there may be areas of the absorber layer and of the cover layer being provided with a constant height gradient, while other areas may be provided with a non-linear height gradient of the absorber layer and of the cover layer, respectively.

As an alternative to the continuous gradient, the primary region and the at least one secondary region may be formed by a stepped surface of the the absorber layer. The primary region may constitute a first or highest step adjacent to the at least one antenna element. Moreover, the surface of the absorber layer may "step down" from the primary region adjacent to the antenna element to one or more secondary regions having a greater distance to the antenna element than the primary region. Stepped surfaces having a macroscopic dimension may also require a low effort regarding manufacturing.

Moreover, the the above-mentioned embodiments may be combined in that in that in the primary and secondary regions, there may be areas of the absorber layer being provided with cavities as described above, while other areas may be provided with a constant or non-linear height gradient of the absorber layer and of the cover layer, respectively.

According to a further embodiment, the radar sensor may be free of an air gap between antenna layer and the absorber layer. This may provide a compact arrangement of the radar sensor including the compound radome being directly attached to the upper surface of the antenna layer. However, the compound radome including the absorber layer may be easily replaced for applications which do not require an absorber layer.

Generally speaking, the absorber layer may touch the antenna layer such there is no air gap therebetween, or alternatively, the absorber layer may not touch the antenna layer such there is an air gap therebetween. The surface of the antenna layer may be flat, which may facilitate a direct contact between the absorber layer and the antenna layer without air gap. Alternatively, the surface of antenna layer may be structured, and this is one example for embodiments for which the absorber layer and the antenna layer may enclose one or more air filled cavities therebetween.

Moreover, the absorber layer may be formed from a plastic material having a dielectric permittivity in a range from up to 15. For example, an optimum dielectric permittivity may be approximately 8.

In another aspect, the present disclosure is directed at a vehicle which comprises a vehicle component and a radar sensor as described above which is arranged in a vicinity of the vehicle component. The vehicle component may be a facia, a bumper or an emblem, for example.

In another aspect, the present disclosure is directed at a method for manufacturing a radar sensor. According to the method, an antenna layer of the radar sensor is provided, the antenna layer including at least one antenna element which is configured to transmit and to receive electromagnetic waves. An absorber layer and a cover layer are connected in order to form a compound radome, wherein the absorber layer has a higher absorption coefficient for the electromagnetic waves than the cover layer. The compound radome is mounted on top on the antenna layer, wherein the compound radome comprises a primary region in which the absorber layer has a reference absorber thickness and in which the cover layer has a reference cover thickness for at least one position within the primary region, and at least one secondary region in which the absorber layer has a secondary absorber thickness and in which the cover layer has a secondary cover thickness for at least one position within the secondary region. The secondary cover thickness is different from the reference cover thickness. A reflectivity of electromagnetic waves is at a minimum within the primary region for a first predefined incident angle and within the secondary region for a second predefined incident angle being different from the first predefined incident angle.

Generally, the method is provided for manufacturing the radar sensor as described above. Therefore, the advantages and the description of the embodiments of the radar sensor are also valid for the method.

According to an embodiment of the method, the absorber layer and the cover layer may be manufactured via three-dimensional printing or injection molding. In addition the connection between the absorber layer and the cover layer for providing the compound radome may be established by an adhesive.

DRAWINGS

Exemplary embodiments and functions of the present disclosure are described herein in conjunction with the following drawings, showing schematically:

Fig. 1 side views of a radar sensor installed in a vehicle,

Fig. 2 a top view of an absorber layer to be placed on top of an antenna layer of a radar sensor,

Fig. 3 a side view a compound radome on top of an antenna layer and a perspective view of the absorber layer,

Fig. 4 a side view of a further embodiment of the compound radome on top of an antenna layer, and

Fig. 5 a side view of a still further embodiment of the compound radome on top of an antenna layer, together with diagrams depicting reflectivity over incident angle.

DETAILED DESCRIPTION

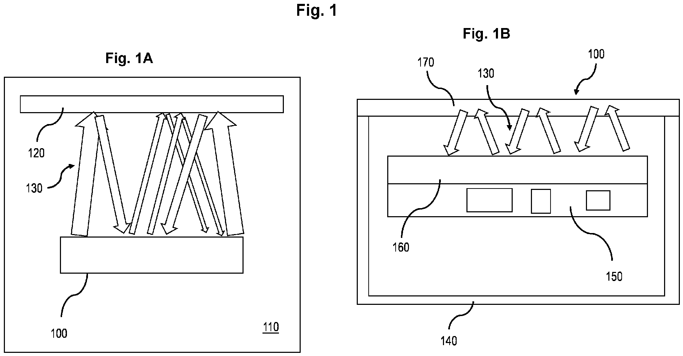

Fig. 1A schematically depicts a radar sensor 100 which is installed in a vehicle 110 behind a vehicle component 120, e.g. a bumper, a facia or an emblem of the vehicle 110. Automotive radar sensors like the radar sensor 100 are generally located behind an outer shell of the vehicle 110 for aesthetic and aerodynamic reasons.

In Fig. 1B, an enlarged side view of the radar sensor 100 is depicted. The radar sensor 100 includes a housing 140 in which different boards or layers 150, 160 of the radar sensor 100 are mounted as internal components. These include a board 150 for electronic components like a monolithic microwave integrated circuit (MMIC) and one or more boards or layers 160 for antenna elements or antenna layers. These antenna layers 160 may include an antenna bottom lid or bottom layer and an antenna top lid or top layer. Alternatively, the antenna layers 160 may include a printed circuit board (PCB) on which the antenna elements are arranged.

In addition, the radar sensor 100 includes a conventional radome 170. The housing 140 and the radome 170 encapsulate and protect the internal components like the boards or layers 150, 160 of the radar sensor 100 from environmental factors like dust, moisture, corrosion, rust and mechanical damages.

The surfaces of the vehicle component 120 may have a high reflectivity for radar waves being transmitted by the sensor 100. Due to this, multibounce reflections occur which are illustrated by the arrows denoted by 130 in Figs. 1A and 1B. The multibounce reflections 130 may be present between the radar sensor 100 and the vehicle component 120. In addition, the multibounce reflections 130 may also be present between the planar surfaces of the radome 170 and the upper antenna layer or board 160. The impact of such multibounce effects on the specific antenna radiation pattern depends on a respective air gap between the radome 170 and the radar sensor 100 and between the radome 170 and the vehicle component 120, and on the thickness and the shape of the radome 170. The reflections 130 are accompanied by unwanted disturbing effects for the performance of the radar sensor 100, such as radome insertion and transmission losses, a boresight error, antenna main lobe ripples, a shrinkage of the beam width and the field of view of the radar sensor 100, increased side-lobe levels and depolarization effects, for example.

Even if the radome 170 is properly designed and mounted for minimizing such unwanted disturbing effects, a majority of these disturbing effects may remain, e.g. due to the reflections. Therefore, the radar sensor 100 according to the disclosure is configured to reduce such disturbing effects as far as possible.

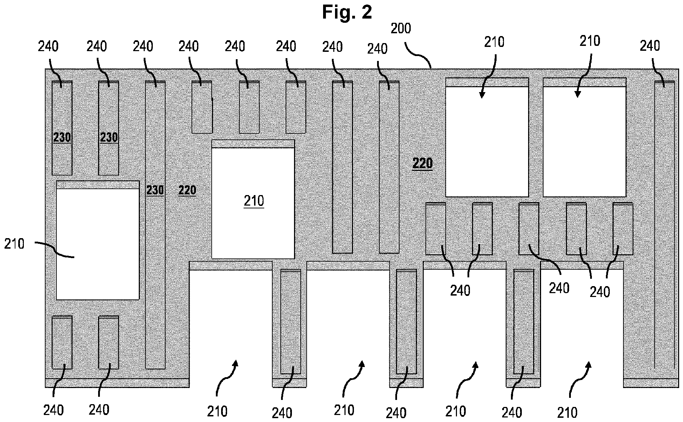

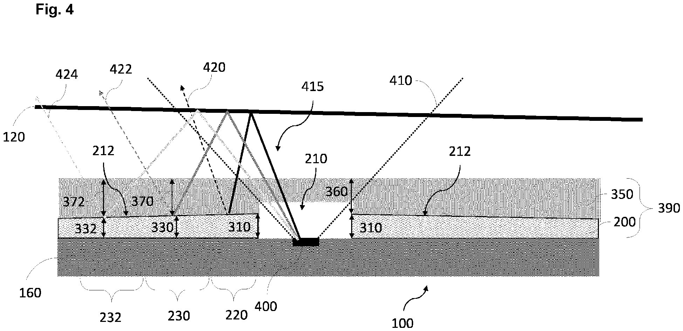

Fig. 2 schematically depicts a top view of an absorber layer 200 of the radar sensor 100 according to the disclosure. The absorber layer 200 is located on top of the antenna layer 160 (see Fig. 2) and includes openings 210 which are provided on top of a respective antenna element 400 (see Fig. 4) of the antenna layer 160. Hence, the absorber layer 200 covers such areas of the antenna layer 160 which are free of antenna elements 400. The absorber layer 200 may have a dielectric permittivity in a range up to 15. The specific dielectric permittivity of the absorber layer 200 may be 8, for example.

The areas of the antenna layer in which a respective antenna element 400 (see Fig. 4) is disposed may be regarded as so-called active areas or regions. Each antenna element 400 is configured to transmit and to receive electromagnetic waves. The transmitted electromagnetic waves have a frequency within the typical bandwidth of 76 to 81 GHz which is currently used for automotive radar sensors. However, frequencies beyond 100 GHz may also be used, e.g. frequency bands around 120 GHz being relevant for advanced automotive radar sensors.

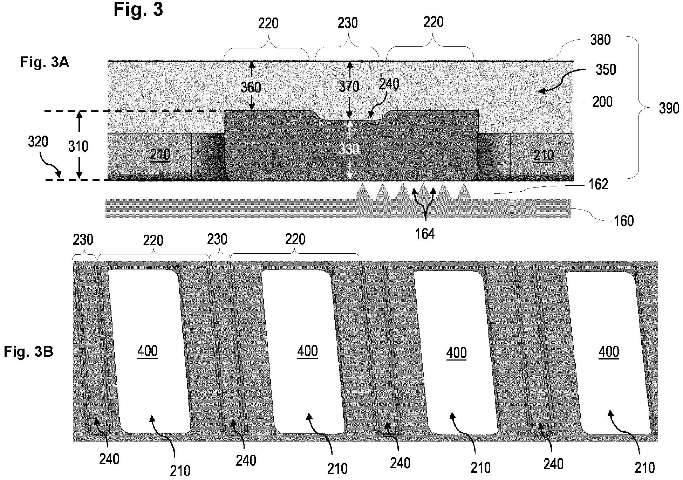

A surface of the absorber layer 200 comprises a primary region 220 in which the absorber layer 200 has a reference absorber thickness 310 (see Fig. 3A) with respect to a reference plane 320 at the "bottom" of the absorber layer 200. The reference plane 320 extends in parallel to the antenna layer 160, e.g. in parallel to an upper surface thereof. The reference absorber thickness 310 of the primary region 220 is defined with respect to the boresight direction of the antenna element 400, i.e. with respect to a direction perpendicular to the reference plane 320.

In addition, the absorber layer 200 comprises a secondary region 230 which is different from the primary region 220 and which has a secondary absorber thickness 330 (see Fig. 3A) being different from, i.e. smaller than, the reference absorber thickness 310. For the embodiment as depicted in Figs. 2 and 3, the secondary region 230 is formed by a plurality of cavities 240 which are recessed with respect to the surface of the absorber layer 200 within the primary region 220.

Fig. 3B schematically depicts a perspective view of the absorber layer 200. The openings 210 in which the antenna elements 400 are located are indicated by recesses only. Between a respective pair of antenna elements 400, i.e. openings 210, a part of a primary region 220 having the reference absorber thickness 310 is located adjacent to a respective antenna element 400. Between a respective pair of antenna elements 400, two parts or portions of the primary region 220 are disposed. Due to an arrangement of portions of the absorber layer 200 between the antenna elements 400, the propagation of surface waves is reduced between the antenna elements 400.

Between these parts or portions of the primary region 220 being adjacent to the respective antenna element 200, a part or portion of the secondary region 230 having the reduced or secondary absorber thickness 330, i.e. a respective cavity 240, is located. As can be seen in Figs. 2, 3A and 3B, the secondary region 230 having a reduced or secondary thickness 330 with respect to the reference plane 320 is formed by the cavities 240 which extend between and around the openings 210 for the antenna elements 400 (see Fig. 2). As can be seen in Fig. 3B, the cavities 240 are aligned in parallel with respect to the antenna elements 400 within the absorber layer 200.

The cavities 240 are formed as rectangular stripes and at least some of these stripes have a length, i.e. a longer side of the respective rectangle, which is larger than the corresponding length of the antenna element 400 in the same direction. Moreover, the cavities 240 are provided with rounded edges, as may be recognized in Fig. 3A, at the boundary between the first and second regions 220, 230. Such rounded edges may facilitate manufacturing the absorber layer 200.

In the embodiment of the absorber layer 200 as shown in Figs. 2 and 3, a bottom surface of the respective cavity 240 is a flat surface, i.e. extending in or parallel to the reference plane 320. Alternatively, such a bottom surface of the respective cavity may be a tilted or tapered surface. This may facilitate the adaptation of the cavity to a predefined incident angle of the electromagnetic waves in order to minimize the reflectivity of the absorber layer 200, as described below.

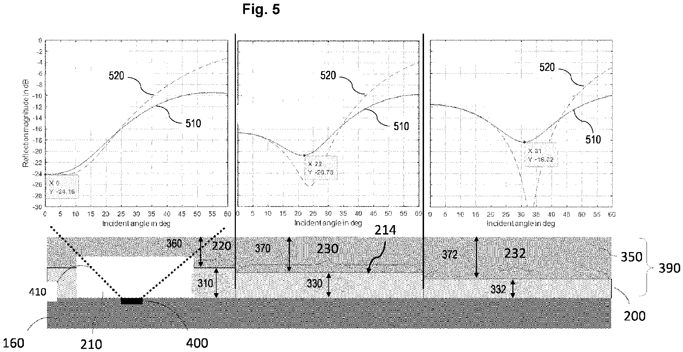

In addition, the radar sensor 100 includes a cover layer 350 (see Fig. 3A and also Figs. 4 and 5) which is made of plastic material. The cover layer 350 covers and protects the entire antenna layer 160, i.e. the absorber layer 200 including the openings 210 in which the antenna elements 400 are located.

In the primary region 220, the cover layer 350 has a reference cover thickness 360 which extends along the boresight direction perpendicular to the reference plane 320, i.e. in the same manner as the reference absorber thickness 310. In the secondary region 220, the cover layer 350 has in increased or secondary cover thickness 370 which also extends along the boresight direction perpendicular to the reference plane 320, i.e. in the same manner as the secondary absorber thickness 330.

On top of the cover layer 350, one or more paint layers 380 are disposed. The cover layer 350 is arranged on top of the absorber layer 200 in such a manner that there is no air gap between the absorber layer 200 and the cover layer 350. Therefore, the absorber layer 200 and the cover layer 350 including the paint layers 360 form a compound radome 390 of the radar sensor 100.

Therefore, the compound radome 390 includes the primary region 220 in which the absorber layer has the reference absorber thickness 310 and in which the cover layer 350 has the reference cover thickness 360, and the secondary region 230 in which the absorber layer has the secondary absorber thickness 330 and in which the cover layer 350 has the secondary cover thickness 370. In the embodiment as shown in Fig 3A, the compound radome 390 has a constant total thickness. Therefore, sum of the reference absorber thickness 310 and of the reference cover thickness 360 is almost the same as the sum of the secondary absorber thickness 330 and of the secondary cover thickness 370, and both sums correspond to the total thickness of the compound radome 390.

As indicated on the left side of Fig. 3A, the antenna layer 160 may have a flat surface. In this case, a direct contact between the absorber layer 200 and the antenna layer 160 is provided without an air gap therebetween. Alternatively, the surface of antenna layer may be structured, as indicated by the structures 162 on top of the antenna layer 160. In this case, air filled cavities 164 are formed between the absorber layer 200 and the antenna layer 160. Generally speaking, the absorber layer 200 may touch the antenna layer 160 such there is not air gap therebetween, or alternatively, the absorber layer 200 may not touch the antenna layer 160 such there is an air gap therebetween.

In both cases, the compound radome 390 is located on top of the antenna layer 160 as a whole. Therefore, the compound radome 390 including the absorber layer 200 may be replaced easily if required, e.g. in cases where no absorber layer is required by a conventional radome including a flat cover layer only.

In the areas or openings 210 in which the radar elements 400 are located, a small air gap may be provided between the respective antenna element 400 and the cover layer 350. Alternatively, the cover layer 350 may be disposed directly on top of the respective antenna elements 400 such that there is no air gap therebetween. As can be recognized in Fig. 3A, the cover layer slightly extends into the openings 210, i.e. on top of the respective antenna elements 400.

Since the secondary cover thickness 370 is different from, i.e. larger than, the reference cover thickness 360, the reflectivity of electromagnetic waves is at a minimum at different incident angles within the primary region 220 on one hand and within the secondary region 230 on the other hand. In detail, the reflectivity of electromagnetic waves is at a minimum within the primary region 220 for a first predefined incident angle, whereas the reflectivity of electromagnetic waves is at a minimum within the secondary region 230 for a second predefined incident angle being different from the first predefined incident angle. This will now be explained in detail with additional reference to Figs. 4 and 5.

At boresight, i.e. at an incident angle of 0° for the electromagnetic waves with respect to the direction being perpendicular to the reference plane 320, an optimized thickness d of the cover layer 350 for achieving a minimum reflectivity is given by the following equation:

$$d = \frac{\lambda}{4} + i * \frac{\lambda}{2} \quad with\ \lambda = \frac{c_0}{f * DK^{0.5}}$$

wherein $\lambda$ is the wavelength of the radar waves or electromagnetic waves at a frequency f, $c_0$ is the velocity of light in vacuum and DK is the dielectric permittivity of the material in the cover layer 350. i denotes an integer number but may also be zero.

At incident angles being greater than zero, the distance d corresponds to an electric length through the cover layer 350 for this specific angle. When considering the electromagnetic waves 415 as shown in Fig. 4 and being transmitted at different angles with respect to the radar sensor 400, different incident angles of the electromagnetic waves at the upper surface of the compound radome 390 correspond to different electric lengths through the cover layer 350. Conversely, if the thickness of the cover layer 350 varies, the same electric length corresponding to a minimum reflection is achieved at different incident angles of the electromagnetic waves, as can also be recognized in Fig. 4.

Fig. 4 depicts a further embodiment of the radar sensor 100 which includes at least one antenna element 400 being installed at an antenna board or layer 160 having a high reflectivity for electromagnetic waves, e.g. due to metallic surfaces or due to a jump in dielectric permittivity. The radar sensor 100 further comprises the absorber layer 200 located on top of the antenna board 160, and the cover layer 350 located on top of the absorber layer 200. Therefore, the absorber layer 200 and the cover layer 350 again constitute the compound radome 390 for the antenna board 160.

The absorber layer 200 has a sloped or tapered surface 212 such that the absorber layer 200 has a maximum or reference thickness 310 adjacent to the antenna element 400. In other words, the absorber layer 200 has the reference absorber thickness 310 adjacent to the antenna element 400, i.e. at a certain position within the primary region 220. For an alternative embodiment, however, the absorber layer may also have a minimum thickness adjacent to the antenna element 400.

The thickness of the absorber layer 200 decreases with increasing distance with respect to the antenna element 400 in two secondary regions 230, 232. Within these secondary regions 230, 232, a respective secondary absorber thickness 330, 332 (corresponding to the secondary absorber thickness 330 within the cavities 240, see Fig. 3) is reached at a certain position within the respective secondary region 230, 232. As such, a continuous or constant height gradient is provided for the absorber layer 200 of the embodiment of the radar sensor 100 as shown in Fig. 4.

Correspondingly, the cover layer 350 has the reference absorber thickness 360 adjacent to the antenna element 400, i.e. at a certain position within the primary region 220. The thickness of the cover layer 350 increases with increasing distance with respect to the antenna element 400 in the two secondary regions 230, 232. Within these secondary regions 230, 232, a respective secondary cover thickness 370, 372 (corresponding to the secondary cover thickness 370 above the cavities 240, see Fig. 3) is reached at a certain position within the respective secondary region 230, 232.

The primary region 220 is defined adjacent to the antenna element 400, and the secondary regions 230, 232 have a greater distance to the antenna element 400 than the primary region 220. The dimensions of the primary and secondary regions 220, 230, 232 may be selected arbitrarily since these regions have imaginary boundaries only. Independently from the specific dimensional definition, the primary and secondary regions 220, 230, 232 differ regarding the height level of the absorber layer 200 with respect to the antenna layer 160 such that the absorber thickness 310 of the absorber layer 200 within the primary region 220 is greater than the respective absorber thickness 330, 332 within the secondary regions 230, 232.

In addition, a package protection zone 410 is depicted in Fig. 4 for the antenna element 400. Within the package protection zone 410, minimum distortion levels are required for the transmitted and received radar waves. Such minimum distortion levels are achieved by the configuration of the absorber layer 200 having the slopped or tapered surface 212 which provides a minimum reflectivity for the electromagnetic waves at different incident angles.

When installed in a vehicle, the radar sensor 100 is located behind another vehicle component 120 (see also Fig. 1) like a facia, a painted bumper, a cover or an emblem. If the antenna element 400 transmits electromagnetic waves 415 at different angles, these electromagnetic waves are reflected at the vehicle component 120 such that the incident angle of these radar waves 415 at an upper surface of the compound radome 390 also varies. Due to the height gradient of the absorber layer 200 with respect to the antenna board 160 and the increasing secondary cover thickness 370, 372, the electromagnetic waves arriving at different incident angles at the upper surface of the compound radome 390 have a minimum reflectivity at different incident angles.

For example, electromagnetic waves having a small incident angle are reflected in the primary region 220 adjacent to the antenna element 200, and the reflectivity of the radar waves is minimized for such a small angle due to the corresponding reference cover thickness 360 of the cover layer 350 adjacent to the antenna element 400. The corresponding minimized reflection in the primary region 220 is indicated by the arrow 420, i.e. for an incident angle of approximately 10°.

In addition, the respective minimized reflection for greater incident angles within the secondary regions 230, 232 is indicated by the arrows 422, 424 which correspond to incident angles of approximately 30° and approximately 45°, respectively, at the upper surface of the compound radome 390. For these incident angles, the reflection of the electromagnetic waves is minimized within the respective secondary region 230, 232 due to the increasing secondary cover thickness 370, 372 of the cover layer 350. As a result, distortions are minimized over an extended range of incident angles within the package protection zone 410 due to the height gradient of the surface 212 between the absorber layer 200 and the cover layer 350.

In the lower part of Fig. 5, a further embodiment of the radar sensor 100 is depicted which differs from the embodiment as shown in Fig. 4 in that the sloped surface 212 having a continuously decreasing height is replaced by a stepped surface 214. In detail, the stepped surface 214 as shown in Fig. 5 has three different height levels corresponding to the reference absorber thickness 330 of the absorber layer 200 within the primary region 220 and to the respective secondary absorber thickness 330, 332 of the absorber layer 200 within the respective secondary regions 230, 232. Due to the stepped surface 214, the cover layer 350 is correspondingly provided with the reference cover thickness 360 within the primary region 220 and with the respective secondary cover thickness 370, 372 within the respective secondary regions 230, 232.

In the upper part of Fig. 5, respective diagrams of the reflectivity or reflection magnitude in dB are shown over the incident angle in degrees for the respective regions 220, 230, 232 of the compound radome 390 provided by the stepped surface 214. Within these diagrams, the respective solid lines 510 depicts the reflection magnitude for horizontally polarized electromagnetic waves, whereas the respective dashed lines 520 represent the reflection magnitude for vertically polarized electromagnetic waves.

As can be recognized in the diagrams, the minimum reflectivity or reflection magnitude is achieved at different incident angles for the primary region 220 and for the respective secondary regions 230, 232. In detail, for the primary region 220 adjacent to the antenna element 200, the minimum reflectivity is achieved approximately at boresight, i.e. at an incident angle of approximately 0°. For the first secondary region 230 having the increased cover thickness 370, a minimum reflectivity or reflection magnitude is achieved at an incident angle of approximately 22°, whereas for the second secondary region 232 having the further increased secondary cover thickness 372, the corresponding minimum of the reflection magnitude is achieved at a greater incident angle of approximately 31°. Hence, the stepped surface 214 provides a minimum reflection magnitude at different incident angles.

According to the disclosure, a radar sensor may comprise an antenna layer which including at least one antenna element configured to transmit and to receive electromagnetic waves, and a compound radome which including an absorber layer extending on top of the antenna layer and a cover layer extending on top of the absorber layer. The absorber layer may have a higher absorption coefficient for electromagnetic waves than the cover layer. The compound radome may comprise a primary region in which the absorber layer has a reference absorber thickness and in which the cover layer has a reference cover thickness for at least one position within the primary region. Furthermore, the compound radome may comprise at least one secondary region in which the absorber layer has a secondary absorber thickness and in which the cover layer has a secondary cover thickness for at least one position within the secondary region. The secondary cover thickness may be different from the reference cover thickness. A reflectivity of electromagnetic waves may be at a minimum within the primary region for a first predefined incident angle, while the reflectivity of electromagnetic waves may be at a minimum within the secondary region for a second predefined incident angle being different from the first predefined incident angle.

According to various embodiments, the secondary absorber thickness may be different from the reference absorber thickness.

According to various embodiments, the first predefined incident angle may represent a boresight direction with respect to the antenna layer.

According to various embodiments, the primary region may extend between the at least one antenna element and the at least one secondary region.

According to various embodiments, the reference absorber thickness within the primary region may correspond to a maximum height level throughout the absorber layer.

According to various embodiments, the at least one secondary region may be at least partly located between two antenna elements.

According to various embodiments, in the at least one secondary region the absorber layer may include a plurality of cavities in which the secondary absorber thickness may be smaller than the reference absorber thickness.

According to various embodiments, in the primary region and/or in the at least one secondary region, a surface of the absorber layer may have a continuous height gradient.

According to various embodiments, the continuous height gradient may have a constant absolute value in at least a part of the primary and secondary regions, and the absolute value may depend on a field of view of the radar sensor.

According to various embodiments, the continuous height gradient may change non-linearly over the surface of the absorber layer in at least a part of the primary and secondary regions.

According to various embodiments, the primary region and the at least one secondary region may be formed by a stepped surface of the absorber layer.

According to various embodiments, the radar sensor may be free of an air gap between the antenna layer and the absorber layer.

According to various embodiments, the antenna layer and the absorber layer may enclose at least one air filled cavity therebetween.

According to the disclosure, a method for manufacturing a radar sensor may comprise: providing an antenna layer of the radar sensor including at least one antenna element which is configured to transmit and to receive electromagnetic waves, connecting an absorber layer and a cover layer in order to form a compound radome, wherein the absorber layer may have a higher absorption coefficient for the electromagnetic waves than the cover layer, and mounting the compound radome on top on the antenna layer. The compound radome may comprise: a primary region in which the absorber layer has a reference absorber thickness and in which the cover layer has a reference cover thickness for at least one position within the primary region, and at least one secondary region in which the absorber layer has a secondary absorber thickness and in which the cover layer has a secondary cover thickness for at least one position within the secondary region, the secondary cover thickness being different from the reference cover thickness. A reflectivity of electromagnetic waves may be at a minimum within the primary region for a first predefined incident angle and within the secondary region for a second predefined incident angle being different from the first predefined incident angle.

According to various embodiments, the absorber layer and the cover layer may be manufactured via three-dimensional printing or injection molding.

Reference numeral list

100     radar sensor
110     vehicle
120     vehicle component, e.g. facia or bumper
130     specular multibounce reflections
140     housing
150     electronic board
160     antenna layer
162     structures on top of the antenna layer
164     air filled cavity
170     conventional radome
200     absorber layer
210     opening in absorber layer for an antenna element
212     sloped upper surface of the absorber layer
214     stepped upper surface of the absorber layer
220     primary region
230     first secondary region
232     second secondary region
240     cavity
310     reference absorber thickness
320     reference plane
330     reduced or secondary absorber thickness
332     further reduced or secondary absorber thickness
350     cover layer
360     reference cover thickness
370     increased or secondary cover thickness
372     further increased or secondary cover thickness
380     painting layer
390     compound radome
400     antenna element

| 410 | package protection zone |
|---|---|
| 415 | transmitted electromagnetic waves |
| 420 | reflected electromagnetic waves at 10° |
| 422 | reflected electromagnetic waves at 30° |
| 424 | reflected electromagnetic waves at 45° |
| 510 | reflectivity for horizontally polarized electromagnetic waves |
| 520 | reflectivity for vertically polarized electromagnetic waves |

**Claims**

1. Radar sensor (100), comprising:

   an antenna layer (160) including at least one antenna element (400) which is configured to transmit and to receive electromagnetic waves, and
   a compound radome (390) which includes an absorber layer (200) extending on top of the antenna layer (160) and a cover layer (350) extending on top of the absorber layer (200),
   wherein the absorber layer (200) has a higher absorption coefficient for the electromagnetic waves than the cover layer (350),
   wherein the compound radome (390) comprises:

   a primary region (220) in which the absorber layer (200) has a reference absorber thickness (310) and in which the cover layer (350) has a reference cover thickness (360) for at least one position within the primary region (220), and
   at least one secondary region (230, 232) in which the absorber layer (200) has a secondary absorber thickness (330, 332) and in which the cover layer (350) has a secondary cover thickness (370, 372) for at least one position within the secondary region (230, 232), the secondary cover thickness (370, 372) being different from the reference cover thickness (360), and

   wherein a reflectivity of electromagnetic waves is at a minimum within the primary region (220) for a first predefined incident angle and within the secondary region (230, 232) for a second predefined incident angle being different from the first predefined incident angle.

2. Radar sensor (100) according to claim 1, wherein
   the secondary absorber thickness (330, 332) is different from the reference absorber thickness (310).

3. Radar sensor (100) according to claim 1 or 2, wherein
   the first predefined incident angle represents a boresight direction with respect to the antenna layer (160).

4. Radar sensor (100) according to any one of claims 1 to 3, wherein
   the primary region (220) extends between the at least one antenna element (400) and the at least one secondary region (230, 232).

5. Radar sensor (100) according to any one of claims 1 to 4, wherein
   the reference absorber thickness (310) within the primary region (220) corresponds to a maximum height level throughout the absorber layer (200).

6. Radar sensor (100) according to any one of claims 1 to 5, wherein
   the at least one secondary region (230, 232) is at least partly located between two antenna elements (400).

7. Radar sensor (100) according to any one of claims 1 to 6, wherein
   in the at least one secondary region (230, 232), the absorber layer (200) includes a plurality of cavities (240) in which the secondary absorber thickness (330, 332) is smaller than the reference absorber thickness (310).

8. Radar sensor (100) according to any one of claims 1 to 7, wherein
   in the primary region (220) and/or in the at least one secondary region (230, 232), a surface (212) of the absorber layer (200) has a continuous height gradient.

9. Radar sensor (100) according to claim 8, wherein

the continuous height gradient has a constant absolute value in at least a part of the primary and secondary regions (220, 230, 232), and

the absolute value depends on a field of view of the radar sensor (100).

10. Radar sensor (100) according to claim 8 or 9, wherein

the continuous height gradient changes non-linearly over the surface (212) of the absorber layer (200) in at least a part of the primary and secondary regions (220, 230, 232).

11. Radar sensor (100) according to any one of claims 1 to 10, wherein

the primary region (220) and the at least one secondary region (230, 232) are formed by a stepped surface (214) of the absorber layer (160).

12. Radar sensor (100) according to any one of claims 1 to 11, wherein

the radar sensor (100) is free of an air gap between the antenna layer (160) and the absorber layer (200).

13. Radar sensor (100) according to any one of claims 1 to 11, wherein

the antenna layer (160) and the absorber layer (200) enclose at least one air filled cavity (164) therebetween.

14. Method for manufacturing a radar sensor (100), the method comprising:

providing an antenna layer (160) of the radar sensor (100) including at least one antenna element (400) which is configured to transmit and to receive electromagnetic waves,

connecting an absorber layer (200) and a cover layer (350) in order to form a compound radome (390), wherein the absorber layer (200) has a higher absorption coefficient for the electromagnetic waves than the cover layer (350), and

mounting the compound radome (390) on top on the antenna layer (160),

wherein the compound radome (390) comprises:

a primary region (220) in which the absorber layer (200) has a reference absorber thickness (310) and in which the cover layer (350) has a reference cover thickness (360) for at least one position within the primary region (220), and

at least one secondary region (230, 232) in which the absorber layer (200) has a secondary absorber thickness (330) and in which the cover layer (350) has a secondary cover thickness (370, 372) for at least one position within the secondary region (230, 232), the secondary cover thickness (370, 372) being different from the reference cover thickness (360), and

wherein a reflectivity of electromagnetic waves is at a minimum within the primary region (220) for a first predefined incident angle and within the secondary region (230, 232) for a second predefined incident angle being different from the first predefined incident angle.

15. Method according to claim 14, wherein

the absorber layer (200) and the cover layer (350) are manufactured via three-dimensional printing or injection molding.

**Fig. 1**

**Fig. 1A**

**Fig. 1B**

**Fig. 2**

**Fig. 3**

Fig. 3A

Fig. 3B

**Fig. 4**

## Fig. 5

**European Patent Office**

Europäisches Patentamt
European Patent Office
Office européen des brevets

# EUROPEAN SEARCH REPORT

**Application Number**

**EP 24 22 2233**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/393238 A1 (TALAI ARMIN [DE] ET AL) 7 December 2023 (2023-12-07) <br><br> * figures 2,5 * <br> * paragraphs [0017] - [0019] * <br> * paragraphs [0047] - [0053] * <br> * paragraphs [0059] - [0060] * <br> * paragraphs [0065] - [0066] * <br> * paragraph [0070] * <br> ----- | 1-5,7,8, 11,12, 14,15 | INV.<br>H01Q17/00<br>H01Q1/32<br>H01Q1/42 |
| X | WO 2024/048671 A1 (SONY GROUP CORP [JP]; SONY SEMICONDUCTOR SOLUTIONS CORP [JP]) 7 March 2024 (2024-03-07) <br> * figures 2,3 * <br> * paragraphs [0018] - [0023] * <br> * paragraphs [0043] - [0044] * <br> ----- | 1-4,6,8, 12-15 | |
| A | US 2024/069155 A1 (TAINAKA YUSUKE [JP] ET AL) 29 February 2024 (2024-02-29) <br> * figure 2 * <br> * paragraphs [0032] - [0049] * <br> ----- | 1-15 | |
| A | WO 2020/162577 A1 (HITACHI AUTOMOTIVE SYSTEMS LTD [JP]) 13 August 2020 (2020-08-13) <br> * figure 9 * <br> * paragraphs [0039] - [0041] * <br> ----- | 1-15 | TECHNICAL FIELDS SEARCHED (IPC) <br><br> H01Q <br> G01S |
| A | US 2024/310477 A1 (SHIOZAKI RYOSUKE [JP] ET AL) 19 September 2024 (2024-09-19) <br> * figures 2,3 * <br> * paragraphs [0021] - [0059] * <br> ----- | 1-15 | |

The present search report has been drawn up for all claims

| Place of search | Date of completion of the search | Examiner |
|---|---|---|
| The Hague | 3 June 2025 | Niemeijer, Reint |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 2233

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | | Publication date | Patent family member(s) | | Publication date |
|---|---|---|---|---|---|
| US 2023393238 A1 | | 07-12-2023 | CN | 117148275 A | 01-12-2023 |
| | | | CN | 219997283 U | 10-11-2023 |
| | | | EP | 4287401 A1 | 06-12-2023 |
| | | | JP | 7564292 B2 | 08-10-2024 |
| | | | JP | 2023177351 A | 13-12-2023 |
| | | | US | 2023393238 A1 | 07-12-2023 |
| WO 2024048671 A1 | | 07-03-2024 | CN | 119744359 A | 01-04-2025 |
| | | | JP | WO2024048671 A1 | 07-03-2024 |
| | | | WO | 2024048671 A1 | 07-03-2024 |
| US 2024069155 A1 | | 29-02-2024 | CN | 117203547 A | 08-12-2023 |
| | | | DE | 112022002391 T5 | 07-03-2024 |
| | | | JP | 7505441 B2 | 25-06-2024 |
| | | | JP | 2022169051 A | 09-11-2022 |
| | | | US | 2024069155 A1 | 29-02-2024 |
| | | | WO | 2022230876 A1 | 03-11-2022 |
| WO 2020162577 A1 | | 13-08-2020 | EP | 3923020 A1 | 15-12-2021 |
| | | | JP | 7163209 B2 | 31-10-2022 |
| | | | JP | 2020126028 A | 20-08-2020 |
| | | | WO | 2020162577 A1 | 13-08-2020 |
| US 2024310477 A1 | | 19-09-2024 | JP | 7313009 B2 | 24-07-2023 |
| | | | JP | 2021025875 A | 22-02-2021 |
| | | | US | 2024310477 A1 | 19-09-2024 |
| | | | WO | 2021024634 A1 | 11-02-2021 |

EPO FORM P0459

For more details about this annex : see Official Journal of the European Patent Office, No. 12/82